# EUROPEAN PATENT APPLICATION

(11) **EP 2 947 629 A1**
(43) Date of publication of application: **25.11.2015**
(21) Application number: 14305768.5
(22) Date of filing: 23.05.2014
(51) Int. Cl.: G06T 9/00, H04N 19/20, H04N 19/46, H04N 19/27

(54) **Method for object-based coding of video information**

(71) Applicant: Alcatel Lucent, 92100 Boulogne-Billancourt (FR)
(72) Inventor: Tytgat, Donny, 2018 Antwerp (BE); Lievens, Sammy, 2018 Antwerpen (BE)
(74) Representative: ALU Antw Patent Attorneys

(57) **Abstract**

The present invention relates to a method, system and related devices for encoding video information. The video encoder recognizing, at least one object in an image of said video information and characterizing said at least one object recognized, by means of meta-information and said video encoder, determining for each of said at least one object recognized a corresponding object model, optimum matching said object recognized based on said meta-information corresponding to said object recognized and the video encoder, generating encoded video information, said encoded video information comprising information corresponding to an object model for each of said at least one object recognized in said image of said video information.

## Description

### FIELD OF THE INVENTION

The present invention relates to the field of coding video information and in particular to improving the efficiency of the storing and transmission of such video information.

### TECHNICAL BACKGROUND OF THE INVENTION

Currently, in traditional video transmission, pixel-based video coding techniques such as MPEG-2/4, H.264 and HEVC are approaching their limits with respect to bandwidth. The required bandwidth is still reduced per new coding standard, however when looking at the history of bits/pixel, the asymptotic behavior of this graph is slowly becoming problematic. The pixel-based approach furthermore limits the applicability of the video streams. At coding time, one already needs to know what end-device the video is aimed for (select proper resolution and/or quality). This is not optimal taking into account the plethora of consumption devices that are available. One could code for the highest quality and/or highest resolution; or one could code many versions of the same content. Alternatively one could aim for a scalable codec, however these are still based on a fixed set of modes and impose a bit-rate penalty. Intra-frame and interframe correlation is limited, and inter-video correlation is not possible. MPEG-4 has ventured into more exotic ways of coding video, however these did not have the needed dynamicity for enabling practical use.

Further, these pixel-based video coding techniques have additional disadvantages such as a limited flexibility, low correlation capabilities (both within a video, and between multiple videos) and which are not adaptive to their usage context.

### SUMMARY OF THE INVENTION

An objective of embodiments of the present invention is to provide with a method, a system and related devices for coding video information of the known type but wherein but wherein the aforementioned shortcoming or drawbacks of the known solutions are alleviated or overcome.

Accordingly, embodiments of the present invention relate to a method for encoding video information, said method comprising the steps of:
- a video encoder VE recognizing, at least one object in an image of said video information and characterizing said at least one object recognized, by means of meta-information; and
- said video encoder, determining for each of said at least one object recognized a corresponding object model optimum matching said object recognized based on said meta-information corresponding to said object recognized; and
- said video encoder, generating encoded video information, said encoded video information comprising information corresponding to an object model for each of said at least one object recognized in said image of said video information.

Correspondingly, embodiments of the invention relate to a Video Encoder for encoding video information, said apparatus comprising:
- an object recognition means , configured to recognize, at least one object in an image of said video information and to characterize said at least one object recognized, by means of meta-information; and
- object model determination means, configured to determine for each of said at least one object recognized a corresponding object model, optimum matching said object recognized based on said meta-information corresponding to said object recognized; and
- encoding means, configured to generate encoded video information, said encoded video information comprising information corresponding to an object model for each of said at least one object recognized in said image of said video information.

Correspondingly, embodiments of the invention relate to a Video decoder for decoding encoded video information as generated by above referred to video encoder, wherein said Video decoder further comprises:
- a model delta application means, configured to generate an improved object model for each object of the at least one object recognized in said image of said video information by applying an object model delta included in said encoded video information, to an object model for said each object of the at least one object recognized in said image of said video information; and wherein said
- video information reproducing means, instead is configured to reproduce said video information by first rendering each improved object model corresponding to an object of the at least one object recognized in said image of said video information and subsequently by assembling the renderings of each said improved object model corresponding to an object of said at least one object recognized in said image of said video information.

In this way, by said video encoder, recognizing at least one object in an image of said video information and characterizing each of said at least one object recognized, by means of meta-information, which is followed by determining for each of the at least one object recognized, a corresponding object model that optimum matches the object recognized, where the determination of the object model is performed based on the meta-information corresponding to the object recognized, and subsequently generating encoded video information where the encoded video information comprises information corresponding to an object model for each of the at least one object recognized in said image of said video information.

Hence the encoded video information only comprises a reference, e.g. being a unique identification, of an object model that corresponds to each of the said at least one object recognized, instead of the full video information, i.e. the pixel information on the image of said video information. In this way, the encoded video information e.g. can be stored and or transmitted requiring respectively much less storage capacity and/or transmission bandwidth.

In this manner, an image or a frame of the video information, i.e. a video asset such as a movie or a user-generated clip can be encoded by recognizing at least one object in the image of said video information followed by characterizing each of the at least one object recognized, by means of meta-information.

By using the meta-information determined for each of the at least one object recognized, a corresponding object model that optimum matches the object recognized is determined, e.g. from a kind of repository storing object models amongst others with the associated meta-information.

Subsequently, encoded video information is generated, where the encoded video information comprises information that corresponds to an object model for each of the at least one object recognized in said image of said video information.

In other words, the encoded video information may be generated by assembling a reference or a unique identification of each object model corresponding to an object recognized.

The embodiment of the present invention optionally allows for an encoding application where the reproduction of the exact image is not the purpose. Instead, a semantically meaningful story can be conveyed in a high-quality manner by applying the retrieved models from an object model repository without providing the model delta. In that way, one can reconstruct the video without having the exact same object details; the semantic meaning is still present however. This can be interesting for extremely low-bit rate applications where no deltas are required to be sent. This at the expense of image fidelity (not image quality).

In a further embodiment of the present invention, the video encoder determines at least one extrinsic model parameter and/or intrinsic model parameter of an object model for each of the at least one object recognized in the image of the video information, where the extrinsic model parameters and/or intrinsic model parameters being determined based on image information that corresponds to each of the at least one object recognized and the corresponding object model, by making a comparison between the image information on the object and the object model to improve said object model.

The at least one extrinsic model parameter and/or intrinsic model parameter are added to the encoded video information so that the encoded video information in addition to the information corresponding to an object model for each of the at least one object recognized in said image of said video information, comprises the at least one extrinsic model parameter and/or intrinsic model parameter of an object model for each of the at least one object recognized in the image of the video information.

Such extrinsic model parameters and/or intrinsic model parameters further add characteristics to an object model determined.

The extrinsic parameters of a model for instance are the location, the orientation, scale, projection parameters for projecting the model into the given image, the estimated light conditions, etc.

These extrinsic parameters include all information for supporting the transformation between the image corresponding to the object and the intrinsically-applied object model. The intrinsic parameters of the model e.g. are an expression of a face, the hair, the color, or even the bending of a tree branch due to the wind, etc. These intrinsic parameters are values for the parameters that enable alterations that are intrinsic to the object.

The image information on the object, being used for making the comparison between the object and a corresponding object model, is being determined in the step of recognizing an object, by means of the object recognition means.

In this way the encoding of the video information is more detailed due to the fact that for each of the at least one recognized object, the corresponding object model is additionally made more detailed and the object model is made more similar to the input data, i.e. the recognized object, by means of the extrinsic model parameters and/or intrinsic model parameters.

In a further embodiment of the present invention, the video encoder determines an object model delta for an object model by comparing the image information on the object recognized with said corresponding object model, optionally with the object model in conjunction with the at least one extrinsic model parameter and/or intrinsic model parameter corresponding to this object model.

The generated encoded video information in this case additionally comprises said object model delta.

Such object model delta of the model is the difference between a determined object model and the image -information of the corresponding object, e.g. pixel-information on the recognized object, where the image information on the object recognized is determined during the step of object recognition, by means of the object recognition means. It is to be noted that this delta relates to information in model space. Moreover, the model delta may also contain the delta or difference of the extrinsic and intrinsic parameters which modify the original parameters.

The model delta may be added to the encoded video information so that the encoded video information in addition to the information corresponding to an object model for each of the at least one object recognized in said image of said video information, optionally together with the at least one extrinsic model parameter and/or intrinsic model parameter of an object model for each of the at least one object recognized in the image of the video information, comprises the model delta for an object model for each of the at least one object recognized in the image of the video information.

After the determination of the at least one extrinsic model parameter and/or intrinsic model parameter, the model delta compared to the input is determined for each object model determined. This delta is also sent along with the extrinsic and/or intrinsic model parameters and the corresponding model reference for each object model determined in order for the decoder to be able to reconstruct the video information. In other words, the encoded video information may comprise for each single object model determined, a corresponding model reference, a set of at least one extrinsic model parameter and/or intrinsic model parameter and a model delta.

In this way the encoding of the video information is even more accurate due to the fact that for each object model determined, a model delta is added. This provides with a better accuracy because the model information is appended with information that is derived from the input data, e.g. pixel-information on the recognized object, updating the model and effectively making it more similar to the input data when rendering it using the determined extrinsic and intrinsic parameters.

Further to this, the present invention further comprises the decoding of encoded video information according to any of claims 1 to 3.

A video decoder receiving the encoded video information where the encoded video information comprises information corresponding to an object model for each of the at least one object recognized in the image of the video information and subsequently determining an object model corresponding to each object of the at least one object recognized in an image of said video information, based on the information corresponding to an object model included in said encoded video information and the video decoder reproducing the video information, i.e. a video asset such as the movie by first rendering each object model corresponding to an object of the at least one object recognized in said image of said video information and subsequently by assembling the renderings of each object model corresponding to an object recognized. The meaning of the rendering of the object models is the transforming of the object model (model space) into the image of the corresponding object model (in the image space). In this way the video decoder reproduces each image of the video information by first rendering each object model corresponding to an object of the at least one object recognized in said image of said video information and subsequently by assembling the renderings of each object model corresponding to an object of the at least one object recognized in said image of said video information.

Still a further embodiment of the present invention may include a video decoder, that is configured to generate an improved object model for each object of the at least one object recognized in said image of said video information by applying a model delta, included in said encoded video information, to an object model for each object of the at least one object recognized in said image of said video information and the video decoder instead reproduces said video information by first rendering each improved object model corresponding to an object of the at least one object recognized in said image of said video information and subsequently by assembling the renderings of each said improved object model corresponding to an object of said at least one object recognized in said image of said video information.

Hence, at first an object model delta determined at the decoder is applied to each object model of the at least one object recognized in said image of said video information. It is to be noted that for each object model an object model delta is determined at the video encoder. By applying such an object model delta to each object model corresponding to an object recognized in said image of said video information, an improved object model is obtained for each object model corresponding to an object recognized in said image of said video information.

The applying of the object model delta is the applying of parameters of the (initial) object model in such a manner that the improved object model closer matches the initial object.

The applying of the object model delta to the intrinsic and extrinsic parameters allows for the intrinsic and extrinsic parameters to be applied and to reflect the changes that were made to the improved object model.

Subsequently the video decoder reproduces the video information by rendering each improved object model instead of rendering the (initial) object model corresponding to an object of the at least one object recognized in said image of said video information.

The decoder then assembles the produced video information in order to create the target output frame. This assembling operation can be done in a simple manner by taking the relevant pixels from each of the produces video information sources, assuming that there is a strict 1-to-1 mapping between the sources and the target output frame. In other embodiments, the assembling operation can be more complex and involve blending operations (e.g. 2d alpha blending) and final inter-object material rendering (e.g. to take into account reflections in between objects).Still a further embodiment of the present invention may include a video decoder reproducing said video information, additionally being based on first generating a rendering of each object model corresponding to an object of the at least one object recognized in said image of said video information in conjunction with at least one corresponding extrinsic model parameter and/or intrinsic model parameter of said object model and subsequently by assembling the renderings of each said object model in conjunction with said at least one corresponding extrinsic model parameter and/or intrinsic model parameter of said object model.

Hence, at first a rendering of each such object model is generated where the rendering additionally is based on the corresponding at least one extrinsic model parameter and/or intrinsic model parameter of the object model. The rendering of the object model in conjunction with the at least one extrinsic model parameter and/or intrinsic model parameter is the transformation from object model into image information that can be applied in the image of the video.

Subsequently, each rendering of each said object model in conjunction with said at least one corresponding extrinsic model parameter and/or intrinsic model parameter of said object model is assembled and added to the video information so that all these renderings of the object models are combined in the video information that is ready for rendering or playing out the video information.

In this way the reproducing of the video information is more detailed due to the fact that for each of the at least one recognized object the corresponding object model is additionally made more detailed by adding the information related to an object model derived from the extrinsic model parameter and/or intrinsic model parameter and making the object model more similar to the input data, i.e. the recognized object.

Still a further embodiment of the present invention may include a video decoder reproducing said video information, additionally being based on first generating a rendering of each improved object model corresponding to an object of the at least one object recognized in said image of said video information in conjunction with at least one corresponding extrinsic model parameter and/or intrinsic model parameter of said improved object model and subsequently by assembling the renderings of each said improved object model in conjunction with said at least one corresponding extrinsic model parameter and/or intrinsic model parameter of said improved object model.

Hence at first a rendering of each such improved object model is generated where the rendering additionally is based on the corresponding at least one extrinsic model parameter and/or intrinsic model parameter of the improved object model. The rendering of the improved object model in conjunction with the at least one extrinsic model parameter and/or intrinsic model parameter is the transformation from the improved object model into image information that can be applied in the image of the video.

Subsequently, each rendering of each said improved object model in conjunction with said at least one corresponding extrinsic model parameter and/or intrinsic model parameter of said improved object model are assembled and added to the video information so that all these renderings of the improved object models are combined in the video information that is ready for rendering or playing out the video information.

In this way the reproducing of the video information is more detailed due to the fact that for each of the at least one recognized object the corresponding improved object model is additionally made more detailed by adding the information related to an improved object model derived from the extrinsic model parameter and/or intrinsic model parameter and making the improved object model more similar to the input data, i.e. the recognized object.

Still a further embodiment of the present invention may include the step of reproducing said video information, additionally being based on the rendering of each object model corresponding to an object of the at least one object recognized in said image of said video information in conjunction with said corresponding at least one extrinsic model parameter and/or intrinsic model parameter of an object model for each of said at least one object recognized in said image of said video information followed by assembling of the renderings of each object model corresponding to an object of the at least one object recognized in said image of said video information in conjunction with said corresponding at least one extrinsic model parameter and/or intrinsic model parameter of an object model for each of said at least one object recognized in said image of said video information.

In this way the encoding of the video information is more detailed due to the fact that for each of the at least one recognized object the corresponding object model is additionally made more detailed and making the object model more similar to the input data, i.e. the recognized object.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. This means that there exists a path between an output of A and an input of B which may be a path including other devices or means.

### BRIEF DESCRIPTION OF THE DRAWINGS

The above and other objects and features of the invention will become more apparent and the invention itself will be best understood by referring to the following description of an embodiment taken in conjunction with the accompanying drawings wherein:
Fig. 1 represents a functional representation of a system for transmitting coded video information from a video information server and subsequent decoding by a video decoder at a client device according to an embodiment of the present invention; and
Fig. 2 represents a functional representation of a video encoder VE for coding video information according to an embodiment of the present invention; and
Fig. 3 represents the functional structure of a video decoder VD for decoding video information encoded by the video encoder VE according to an embodiment of the present invention.
Fig. 4A, B, D represent respectively an original image of the video information further respective image wherein the various objects are recognized

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

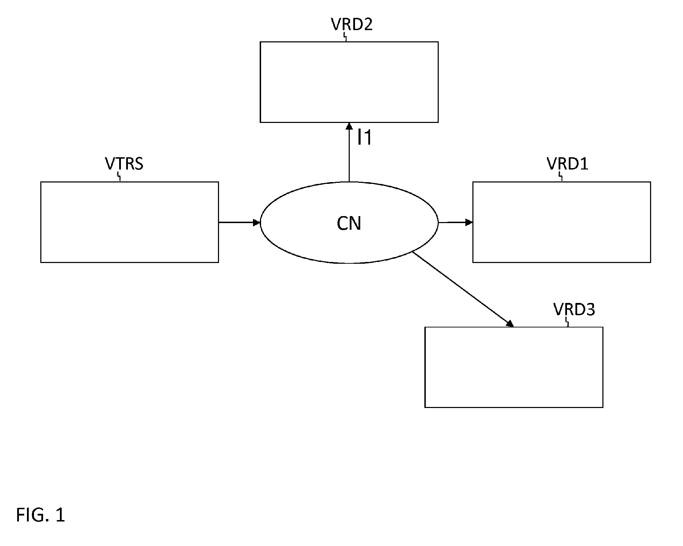

In the following paragraphs, referring to the drawing in FIG. 1, an implementation of the system for transmitting encoded video information from a video information server to a client device according to an embodiment of the present invention is described.

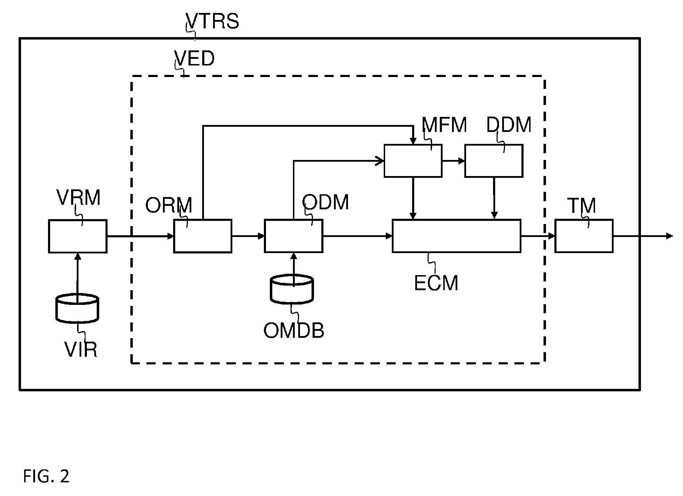

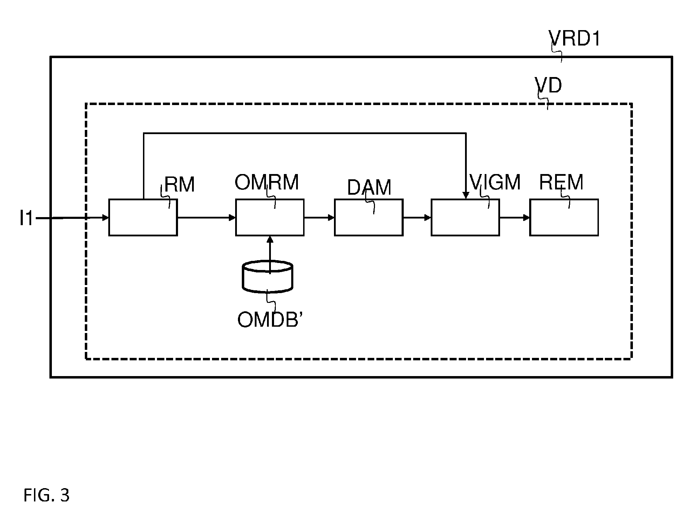

In the following paragraphs, referring to the drawing in FIG. 2, an implementation of the video encoder for coding video information according to an embodiment and referring to the drawing in FIG. 3, an implementation of the video decoder for decoding of the encoded video information according to an embodiment of the present invention is described. In a further paragraph, all connections between mentioned elements are defined. Subsequently all relevant functional means of the mentioned video encoder VE as presented in FIG.2 are described followed by a description of all interconnections and all relevant functional means of the mentioned video decoder as presented in FIG. 3 are described followed by a description of all interconnections.

In the succeeding paragraph the actual execution of the system is described.

A first essential element of the system of Fig. 1 is a video information server VTRS providing client devices VRD1, VRD2, VRD3 with video information either via broadcast or multicast or unicasting of such video information.

Such a video information server VTRS may be a caching server at content delivery network or be a broadcasting server or other suitable device.

The video information the server holds for distributing may contain movies e.g. for delivery on demand or broadcasting or otherwise.

Further the system includes a plurality of client devices VRD1, VRD2, VRD3 for receiving such video information forwarded by such a video information server VTRS.

Such client device may be a television set coupled via a set top box to the internet or other suitable network for delivering video information, or may be mobile devices able to render such video information or be any other kind of suitable device.

Each client devices VRD1, VRD2, VRD3 is coupled to the video information server VTRS over a communications network able to support distribution of video content from the server towards each of the client devices VRD1, VRD2, VRD3, where such communications network may include an xDSL, xPON, WMAN, LAN, 3G link or other fixed or mobile connection such as Wi-Fi, Bluetooth, GSM, UMTS 4G etc or any combination of the previous communication networks.

A first essential means of the video information server VTRS of an embodiment of the present invention is a video information reception means VRM configured to retrieve video information maintained at a video information repository VIR.

The video information server VTRS further comprises a video encoding device VED that in turn includes an object recognition means ORM that is configured to recognize, at least one object in an image of the video information retrieved and to characterize the at least one object recognized, by means of meta-information and an object model determination means ODM that is configured to determine for each of said at least one object recognized a corresponding object model optimum matching the object recognized, based on the meta-information corresponding to the object recognized. The video encoder VE further may comprise an object model repository OMDB for maintaining a plurality of object models each object model being associated with meta-information.

The video encoding device VED further comprises an encoding means ECM that is configured to generate encoded video information where the encoded video information comprises information corresponding to an object model for each of said at least one object recognized in said image of said video information and a model fitting means MFM that is configured to determine at least one extrinsic model parameter and/or intrinsic model parameter of the object model for each of said at least one object recognized in said image of said video information, said extrinsic model parameters and intrinsic model parameters, being determined based on image information corresponding to said at least one object recognized and said corresponding object model. The encoding means ECM further may be configured to generate encoded video information additionally comprising said at least one extrinsic model parameter and/or intrinsic model parameter of said object model for each of said at least one object recognized in said image of said video information.

The Video encoder VE further may comprise a delta determination means DDM that is configured to determine an object model delta for an object model by comparing said image information on said object recognized with said corresponding object model, optionally in conjunction with said at least one extrinsic model parameter and/or intrinsic model parameter. Moreover, the encoding means ECM further may be configured to generate encoded video information that additionally comprises the model delta determined for each object model corresponding to each object of said at least one object recognized in an image of said video information.

Further the video information server VTRS comprises a transmitting means that is configured to transmit the encoded video information over the communications network CN e.g. towards a client device VRD1 and/or VRD2, VRD3.

The video information reception means VRM of the video information server VTRS has an input that is coupled with an output of the video information repository VIR. The video information reception means VRM further has an output that is coupled to an input of the object recognition means ORM that further is coupled with an output to an input of the object model determination means ODM. The object model determination means ODM further is coupled with an output to an input of the encoding means ECM and in addition is coupled with an output to an input of the model fitting means MFM. The object recognition means ORM further is coupled with an output to an input of the model fitting means MFM. The object model determination means ODM further is coupled to the object model repository OMDB.
The model fitting means MFM is coupled with an output to an input of the encoding means ECM. The delta determination means DDM further is coupled with an input to an output of the model fitting means MFM and coupled with an with an output to an input of the encoding means ECM. Further, the encoding means ECM is further coupled with an output to an input of the transmitting means TM that in turn owns an output-terminal that is at the same time an output-terminal of the video information server VTRS.

A first essential means of a client devices VRD1 of an embodiment of the present invention is a video information receiving means RM that is configured to receive said encoded video information, where the encoded video information comprises information corresponding to an object model for each of at least one object recognized in said image of said video information and an object model retrieving means OMRM that is configured to determine an object model corresponding to each object of said at least one object recognized in an image of said video information, based on said information corresponding to an object model included in said encoded video information.

The video decoder VD further may comprise an object model repository OMDB' for maintaining a plurality of object models each object model being associated with meta-information.

Additionally, the video decoder comprises a model delta application means DAM that is configured to generate an improved object model for each object of the at least one object recognized in said image of said video information by applying a model delta included in said encoded video information, to an object model for said each object of the at least one object recognized in said image of said video information.

Moreover, the video decoder VD further comprises a video information reproducing means VIGM that is configured to reproduce said video information by first rendering each object model corresponding to an object of the at least one object recognized in said image of said video information and subsequently by assembling of the renderings of each object model corresponding to an object of the at least one object recognized in said image of said video information.

In case an object model delta is available in the video information received, the video information reproducing means VIGM applies an improved object model instead of an object model in the rendering.

Hence, the video information reproducing means VIGM, instead is configured to reproduce said video information by first rendering each improved object model corresponding to an object of the at least one object recognized in said image of said video information and subsequently by assembling the renderings of each said improved object model corresponding to an object of said at least one object recognized in said image of said video information.

In a further embodiment, the video information reproducing means VIGM, further may be configured to reproduce said video information, additionally being based on first generating a rendering of each object model corresponding to an object of the at least one object recognized in said image of said video information in conjunction with at least one corresponding extrinsic model parameter and/or intrinsic model parameter of said object model and subsequently by assembling the renderings of each said object model in conjunction with said at least one corresponding extrinsic model parameter and/or intrinsic model parameter of said object model.

In a still another embodiment, the video information reproducing means VIGM, further may be configured to reproduce said video information, additionally being based on first generating a rendering of each improved object model corresponding to an object of the at least one object recognized in said image of said video information in conjunction with at least one corresponding extrinsic model parameter and/or intrinsic model parameter of said improved object model and subsequently by assembling the *renderings* of each said improved object model in conjunction with said at least one corresponding extrinsic model parameter and/or intrinsic model parameter of said improved object model.

Finally, the client devices VRD1 comprises a rendering means REM that is configured to render the reproduced video information. The rendering means REM usually comprises a display and speakers for respectively rendering the video at the display and corresponding audio via the speakers.

The video information receiving means RM has an input-terminal I1 that is at the same time an input-terminal of the client device VRD1. The video information receiving means RM is coupled with an output to an input of the object model retrieving means OMRM and is coupled with an output to an input of the video information reproducing means VIGM. The object model retrieving means OMRM further is coupled to the object model repository OMDB'

The object model retrieving means OMRM further is coupled with an output to an input of the model delta application means DAM that in turn is coupled with an output to an input of the video information reproducing means VIGM. The video information reproducing means VIGM is coupled with an output to an input of the rendering means REM.

It is to be noted that each of the further client devices VRD2, VRD3 have similar structure and couplings as client devices VRM1 as described above.

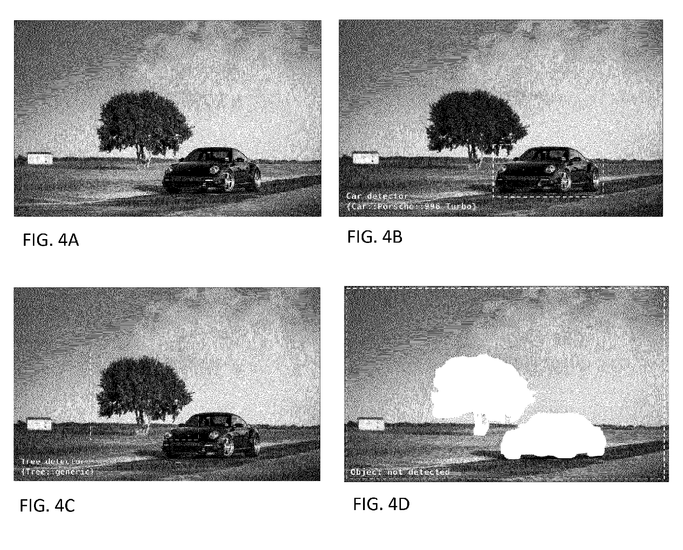

In order to explain the present invention first it is assumed that a certain video asset is retrieved by the video information reception means VRM from the video information repository VIR. The first image of the video asset to be encoded is represented by FIG. 4A where the image comprises the following objects: a car, a tree and a chack.

A car is visible in a field along with a tree. A small shack can also be seen in the image.

At first, the object recognition means ORM that is configured to recognize, at least one object in an image of the video information analyzes this first image. The object recognition means ORM includes a batch of detectors able to detect objects within each such image. Hence, the batch of detectors being executed, of which the car detector recognizes a car in the frame where the detector even further specify the brand of the car and its type. In this case, the detector is well trained and provides a detailed analysis of the object in the image (See FIG. 4B). A tree detector furthermore detects a tree, however it can only give the generic notion of it being a tree, and not the specific species (See FIG. 4C). The rest of the detectors return no detection, so we do not have specifics on the rest of the frame (as shown in figure 4D). Hence the shack is not recognized and hence no information heron is available. Each of the detectors of the object recognition means ORM, at recognition determines meta-information i.e. keywords on the recognized objects and characterizes each of the recognized objects in this manner. The meta-information on the recognized car includes: "car: Porsche: 996 Turbo".

A tree detector furthermore detects a tree, however it can only give the generic notion of it being a tree and not the specific species.

The rest of the detectors return no detection, so we do not have specifics on the rest of the image.

The next step involves fetching the relevant models from the object model repository OMDB with their unique identification i.e. the object reference. The object model repository OMDB maintaining a plurality of object models each object model having a unique identification and being associated with meta-information.

For the cars, the object model repository OMDB an extensive hierarchical model is available. Due to cars being largely rigid objects, a 3D (dimensional) morphable model is available which can instantiate a large class of cars using a small number of weights. For the trees, the fetched model is appearance based. This means that not the full 3D representation of the modeled trees is available, but that the approach is 2D (dimensional) example based. For the rest of the scene, a generic model is used which employs traditional 2D coding techniques to transfer information.

This meta-information, i.e. keywords, on the recognized objects is applied as an input of the object model determination means ODM that is configured to determine for each of said at least one object recognized a corresponding object model that optimum matches the object recognized based on the meta-information corresponding to the object recognized. In the present example, in the respective image a car and a tree are recognized. Based on the respective meta-information, in case of the recognised car, including car: Porsche: 996 Turbo and in case of the tree only including tree, corresponding object models are to be determined by the object model determination means ODM.

Hence, the object model determination means ODM determines the object model corresponding to the object recognized i.e. the car based on the respective meta-information "car: Porsche: 996 Turbo" from the object model repository OMDB. Based, on this meta-information the object model determination means ODM determines the object model, i.e. the "Porsche 966 turbo" object model that best suits the recognized car and the identification, being "ID-porsche_966_turbo" of the "Porsche 966 turbo" object model.

Further, for the recognized tree, the object model determination means ODM determines the object model corresponding to the object recognized i.e. the tree based on the respective meta-information "tree" from the object model repository OMDB. Based, on this meta-information the object model determination means ODM determines the object model, i.e. a "tree" object model that best suits the recognized tree and the identification, being "ID-tree", of the "tree" object model.

Subsequently, the encoding means ECM generates encoded video information by assembling each of the references of an object model that corresponds to an object recognized in the image, i.e. the car and the tree. Hence the the encoding means ECM generates an encoded video information by assembling "ID-porsche_966_turbo" and "ID-tree"

Additionally, a model fitting means MFM may determine one or more extrinsic model parameter and/or intrinsic model parameter of the "Porsche 966 turbo" object model that corresponds to the Porsche by comparing the image information on the segmented object, as determined by the object recognition means with the determined "Porsche 966 turbo" object model.

The extrinsic model parameters include the determination of the camera parameters in the model domain which were used to generate the given image, the light effects that are present and the location, orientation and scale of the car with regard to this determined camera.

In order to derive an image from the model it is necessary to specify a virtual camera and subsequently using the associated reference system of this camera, the orientation and translation determination of the model, i.e. the car in this case.

The camera parameters in case of a 3D model are: the location and/or the orientation of this virtual camera which is assumed to be used for taking the picture of the object, as well as the FOV (field of view) of this virtual camera. In case of an appearance model, the camera parameters may be the 2D location, orientation and scale. The extrinsic parameters define the location, orientation and scale of an object in the initial frame and are determined and registered by means of the parameters of a virtual camera that virtually captures the image of the video information.

The intrinsic parameters include things like the color of the car being black, whether the doors are opened/closed, which is closed in the current example, etc. Subsequently, the encoding means ECM generates encoded video information by assembling each of the references of an object model that corresponds to an object recognized in the image, i.e. the car and the tree and in addition adds the earlier determined parameters to this encoded video information. Hence the encoding means ECM generates an encoded video information by assembling "ID-porsche_966_turbo" and "ID-tree" and in addition the extrinsic model parameter and/or intrinsic model parameter for the "Porsche 966 turbo" object model and the "tree" object model being respectively for the location: parameter x , orientation: parameter y and scale of the car: parameter z for the car and being for the 2D location of the tree: parameter x1, 2D orientation: parameter y1 and 2D scale of the tree: parameter z1 for the tree.

The intrinsic parameters include things like the color of the car being black, whether the doors are opened/closed, which is closed in the current example, etc.

The tree in this example is modelled according to an appearance model, where the intrinsic parameters are abstract of nature (meaning that there is no link between the 'real' properties such as branches or leaves, and the intrinsic properties of the tree. Such an appearance model is a set of images of a certain object where each image represents a different point of view of the meant object.

In case of the tree, the intrinsic parameters consist of a vector with a set of values, where each such value represents the weight for one of a plurality of modelled base images where this plurality of base image together constitute the appearance model of the tree. The weight indicates how much the relevant base image will be applied to the end result. Such a base image is part of an orthogonal set of base images that linearly span the modeled subspace.

The intrinsic parameters are determined by applying the mathematical 'dot product' operation between the input image and each of the base images. The result of this 'dot product' operation is the weight for the relevant base image. All these weights together (a vector) represent the intrinsic parameter set.

It is to be noted that the tree model is a 2D appearance model, the extrinsic model parameter contains a 2D location, 2D scale and 2D orientation of the model.

The location parameter being indication relative to a predetermined point of the image of the video.

Additionally the delta determination means DDM first determines an object model delta for the Porsche object model by comparing the image information on said "Porsche" object that is recognized with said corresponding determined "porsche_966_turbo" object model. The result of this comparison is the addition of the reflection of the environment on the door of the car. Furthermore a detail in the wheels (brake calliper) is different than what was in the model, and has been added to this delta (the calliper is red instead of yellow, and the brake calliper color is not within the intrinsic parameter set of this model).

Finally the encoding means ECM generates encoded video information that additionally comprises the model delta determined for each object model, being the addition of the reflection of the environment on the door of the car. Furthermore a detail in the wheels (i.e. the brake calliper) is different from the model, and has been added to this delta (the calliper is red instead of yellow, and the brake calliper color is not within the intrinsic parameter set of this model) for the determined "porsche_966_turbo" object model and being an additional base image (i.e. in model space) which nullifies the difference between the generated image from the weighted model base images, and the input image for the "tree" object model. Optionally in case these parameters are presently determined the delta for both determined object models are added to the encoded video information.

The model delta's are then determined, and can be applied to update the existing model. In this case, the shape of the car could be modeled accurately, however the color had not been 'seen' before in the model store. The color is thus estimated, and send as a model delta (parameter) along with the model coefficients.

This delta is furthermore sent to the 'update model' module in order to include that seen color for next coding instances. The delta of the tree is determined, which is in 2D form due to the model specifics (appearance based). An example instance is added in the 'update model' step in order to be able to better model such trees in the future. The generic portion delta is determined in traditional fashion as a residual frame.

The Video decoder VD at the client device receives the encoded video information generated by the video encoder VE at the video information server VTRS by means of the video information receiving means RM. The received encoded video information comprises information corresponding to an object model for each of at least one object recognized in the image of the video information by the video encoder VE. The encoded video information at least comprises the respective determined object model references: "ID-porsche_966_turbo" for the car and "ID-tree" for the tree recognized in the initial image of the video information.

Subsequently, the object model retrieving means OMRM determines an object model corresponding to each object of the at least one object recognized in an image of said video information, based on the information corresponding to an object model included in said encoded video information. The object model retrieving means OMRM retrieves the information corresponding to each object model determined from the encoded video information, which information, being an object model reference, i.e. the ID-porsche_966_turbo" model reference/identifier for the meant object model, is used to determine and retrieve the relevant object model from the object model repository OMDB' that is adapted to maintain a plurality of object models each object model being associated with meta-information.

The object model repository OMDB' comprises a plurality of object models related to any kind of objects, amongst others all kinds of car object models and/or tree object models.

Hence, based on the "ID-porsche_966_turbo" model reference/identifier, the object model retrieving means OMRM searches the model repository OMDB' for the meant object model. Most probably the meant ""ID-porsche_966_turbo" object model is available in the object model repository OMDB' which is searched based on the model reference. Subsequently, the object model retrieving means OMRM retrieves the porsche_966_turbo" object model from the model repository OMDB'.

The object model retrieving means OMRM retrieves the tree object model in the same manner as the Porsche object model from the object model repository OMDB', based on the object model reference "ID_tree"

In case the object model is not available at the object model repository OMDB', the missing object model is to be obtained at demand of the object model repository OMDB' at another object model repository that does possess the missing object model.

In this case the model reference for each of the scene objects is taken, and fetched from the local object model repository OMDB'. If the model is not available at the object model repository OMDB', it is fetched from another object model repository and possibly cached thereafter at the object model repository OMDB' so that a kind of local knowledge store is built up which will significantly improve average bandwidth over time (for fetching missing object models).

Further, in case there is a model delta included in the encoded video information, the model delta applying means DAM generates an improved object model for each object of the at least one object recognized in said image of said video information by applying a model delta included in said encoded video information, to an object model for said each object of the at least one object recognized in said image of said video information. Hence the delta applying means DAM adds the reflection of the environment on the door of the car and furthermore changes a detail of the wheel, changes the caliper parameter of the retrieved car object model from yellow into red as the brake caliper color is not within the intrinsic parameter set of this car object model. In this manner an improved object model is generated based on the object model delta as included in the encoded video information. Further as there is no model delta for the tree, no improved object model for the tree is generated.

Subsequently, the video information reproducing means VIGM, reproduces the video information by first rendering each improved object model, i.e. the improved Porsche object model and the improved tree object model followed by assembling the renderings of each improved object model, i.e. the Porsche - and the tree object model.

The rendering of an object model is the transformation from the object model representation of the initially recognized object into the corresponding pixel information of the initially recognized object.

Further, the situation is considered wherein the encoded video information in addition to the information corresponding to an object model for each of at least one object recognized in the image of the video information by the video encoder VE, i.e. "ID-porsche_966_turbo" for the car and "ID-tree" for the tree also comprises at least one extrinsic model parameter and/or intrinsic model parameter of said object model for each of said at least one object recognized in said image of said video information, i.e. being respectively for the location of the car: parameter x , orientation: parameter y and scale of the car: parameter z for car the car and being for the 2D location of the tree: parameter x1 , 2D orientation: parameter y1 and 2D scale of the car: parameter z1 for car the tree for tree.

The intrinsic parameters include things like the color of the car being black, whether the doors are opened/closed, which is closed in the current example, etc. The intrinsic parameters of the tree consist of a vector with values that represent the weights for each of the modelled base images, the weight representing how much the relevant base image will be applied to the end result.

It is to be noted that the tree model is a 2D appearance model, the extrinsic model parameter contains a 2D location, 2D scale and 2D orientation of the model.

In this situation, assuming the respective object models being the porsche_966_turbo" object model and the tree object model are already retrieved by the object model retrieving means OMRM as described earlier.

The video information reproducing means VIGM further reproduces the video information, additionally being based on assembling each said object model in conjunction with said corresponding at least one extrinsic model parameter and/or intrinsic model parameter of said object model for each of said at least one object recognized in said image of said video information.

Subsequently, the video information reproducing means VIGM, reproduces the video information by first rendering each object model, i.e. the Porsche object model in conjunction with the corresponding extrinsic model parameter and/or intrinsic model parameters being as above described followed by the rendering of the tree object model in conjunction with the corresponding extrinsic model parameter and/or intrinsic model as earlier described which step is succeeded by the assembling of the renderings of each object model, i.e. the Porsche - and the tree object model in an image of the video information.

Finally, the rendering means REM of the client devices VRD1 is able to render the reproduced video information at the display and speakers where the rendering respectively includes the playing of video at the display and corresponding audio via the speakers. The reproduced image of the video information in this embodiment includes the mentioned tree and Porsche.

The parts of the image not recognized and encoded may be encoded and subsequently be decoded in a traditional pixel based manner.

One can as such use the 'error' from the 'prediction' to increase the world knowledge. This is key for the self-learning step. In the end, the information is gathered for all objects in the scene, and the encoded video is built.

A further embodiment of the present invention is that a model delta of an object model is determined by making a comparison of the subject object model with the corresponding object. The resulting object model delta subsequently may be applied to update the existing object model and create an improved object model. In this case, the shape of the car could be modeled accurately, however the color had not been 'seen' before in the model store. The color is thus estimated, and send as a delta along with the model coefficients. The same is valid for the car's caliper which is red instead of yellow in the (initial) car object model.

This object delta is additionally may be sent to an 'update model' means that may be incorporated in the video encoder that is configured to update the object model repository OMDB with the improved model so that in future situations such improved car model could be applied immediately for coding video information.

After this, the delta compared to the input is determined. This delta is also sent along with the model parameters in order for the decoder to be able to reconstruct the information. Note that the delta is in the model space, not the frame space (with traditional codec's this is in frame space). This allows for the delta to be used to update the existing model. One can as such use the 'error' from the 'prediction' to increase the world knowledge. This is key for the self-learning step. In the end, the information is gathered for all objects in the scene, and the encoded video is built.

The object model repository OMDB may be a distributed repository that is available for use by the other video encoders. In case an encoder has encoded video1 for example and has updated the model store, these updates can be used when encoding the next video, e.g. video 2. The model store, i.e. the object model repository OMDB may also be shared among encoders within the same ecosystem (e.g. a certain CDN). As such, all encodings within that ecosystem can take advantage of the established knowledge, and inter-video correlation can be done. So when a model of actor X is built by using information in one video, this model can be re-used and updated when encoding another video that also stars this actor. The same is valid for the object model repository OMDB' that is applied for decoding video information.

Additionally there may be a mechanism available for synchronizing the object models with associated information present in object model repository OMDB with the object models present in the object model repository OMDB'.

The video information may be equivalent to a video signal.

Further, it is to be noted that although the embodiment describes a client-server architecture wherein the present invention is implemented and executed, this also could have been implemented and executed in a peer-to-peer architecture, cloud architecture, hardware architecture, and each other form in between.

The various means of the system can be located in a central way or in a more distributed manner, where these means may be distributed over the client devices and an optional server device.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Method for encoding video information, said method comprising the steps of:
- a video encoder (VE) recognizing, at least one object in an image of said video information and characterizing said at least one object recognized, by means of meta-information; and
- said video encoder, determining for each of said at least one object recognized a corresponding object model optimum matching said object recognized based on said meta-information corresponding to said object recognized; and
- said video encoder, generating encoded video information, said encoded video information comprising information corresponding to an object model for each of said at least one object recognized in said image of said video information.

2. Method for coding video information according to claim 1, wherein said method further comprises the step of said video encoder (VE), determining at least one extrinsic model parameter and/or intrinsic model parameter of said object model for each of said at least one object recognized in said image of said video information, said extrinsic model parameters and/or intrinsic model parameters, being determined based on image information corresponding to said at least one object recognized and said corresponding object model; and
wherein said step of generating encoded video information, generates encoded video information additionally comprising said at least one extrinsic model parameter and/or intrinsic model parameter of said object model for each of said at least one object recognized in said image of said video information.

3. Method for coding video information, according to claim 1 or 2, wherein said method further comprises the step of:
- said video encoder (VE), determining an object model delta for an object model by comparing said image information on said object recognized with said corresponding object model, optionally in conjunction with said at least one extrinsic model parameter and/or intrinsic model parameter; and
wherein said step of generating encoded video information, includes generating encoded video information additionally comprises said model delta.

4. Method for decoding encoded video information according to any of claims 1 to 3, said method comprising the steps of:
- a video decoder (VD) receiving said encoded video information, said encoded video information comprising information corresponding to an object model for each of at least one object recognized in said image of said video information; and
- said video decoder (VD), determining an object model corresponding to each object of said at least one object recognized in an image of said video information, based on said information corresponding to an object model included in said encoded video information; and
- said video decoder (VD), reproducing said video information by first rendering each object model corresponding to an object of the at least one object recognized in said image of said video information and subsequently by assembling the *renderings* of each said object model corresponding to an object of said at least one object recognized in said image of said video information.

5. Method for decoding encoded video information according to claim 4, wherein said method further comprises the step of:
- said video decoder (VD), generating an improved object model for each object of the at least one object recognized in said image of said video information by applying a model delta included in said encoded video information, to an object model for said each object of the at least one object recognized in said image of said video information; and
- said video decoder (VD) instead reproducing said video information by first rendering each improved object model corresponding to an object of the at least one object recognized in said image of said video information and subsequently by assembling the renderings of each said improved object model corresponding to an object of said at least one object recognized in said image of said video information.

6. Method for decoding encoded video information according to claim 4, wherein said step of, said video decoder (VD), reproducing said video information, additionally being based on first generating a rendering of each object model corresponding to an object of the at least one object recognized in said image of said video information in conjunction with at least one corresponding extrinsic model parameter and/or intrinsic model parameter of said object model and subsequently by assembling the renderings of each said object model in conjunction with said at least one corresponding extrinsic model parameter and/or intrinsic model parameter of said object model.

7. Method for decoding encoded video information according to claim 5, wherein said step of said video decoder (VD), reproducing said video information, additionally being based on first generating a rendering of each improved object model corresponding to an object of the at least one object recognized in said image of said video information in conjunction with at least one corresponding extrinsic model parameter and/or intrinsic model parameter of said improved object model and subsequently by assembling the renderings of each said improved object model in conjunction with said at least one corresponding extrinsic model parameter and/or intrinsic model parameter of said improved object model.

8. Video Encoder (VE) for encoding video information, said apparatus comprising:
- an object recognition means (ORM), configured to recognize, at least one object in an image of said video information and to characterize said at least one object recognized, by means of meta-information; and
- object model determination means (ODM), configured to determine for each of said at least one object recognized a corresponding object model, optimum matching said object recognized based on said meta-information corresponding to said object recognized; and
- encoding means (ECM), configured to generate encoded video information, said encoded video information comprising information corresponding to an object model for each of said at least one object recognized in said image of said video information.

9. Video Encoder (VE) for encoding video information, according to claim 8, said video encoder (VE) further comprises:
- model fitting means (MFM), configured to determine at least one extrinsic model parameter and/or intrinsic model parameter of said object model for each of said at least one object recognized in said image of said video information, said extrinsic model parameters and intrinsic model parameters, being determined based on image information corresponding to said at least one object recognized and said corresponding object model; and
wherein said encoding means (ECM) further is configured to generate encoded video information additionally comprising said at least one extrinsic model parameter and/or intrinsic model parameter of said object model for each of said at least one object recognized in said image of said video information.

10. Video encoder (VE) for coding video information, according to claim 8 or 9, apparatus further comprises:
- delta determination means (DDM) configured to determine an object model delta for an object model by comparing said image information on said object recognized with said corresponding object model, optionally in conjunction with said at least one extrinsic model parameter and/or intrinsic model parameter; and wherein said encoding means (ECM) further is configured to generate encoded video information additionally comprising said model delta.

11. Video decoder (VD) for decoding encoded video information according to any of claims 8 to 10, said apparatus comprising:
- video information receiving means (RM), configured to receive said encoded video information, said encoded video information comprising information corresponding to an object model for each of at least one object recognized in said image of said video information; and
- object model retrieving means (OMRM), configured to determine an object model corresponding to each object of said at least one object recognized in an image of said video information, based on said information corresponding to an object model included in said encoded video information; and
- video information reproducing means (VIGM), configured to reproduce said video information by first rendering each object model corresponding to an object of the at least one object recognized in said image of said video information and subsequently by assembling the renderings of each said object model corresponding to an object of said at least one object recognized in said image of said video information.

12. Video decoder (VD) for decoding encoded video information according to claim 11, wherein said Video decoder (VD) further comprises:
- a model delta application means (DAM), configured to generate an improved object model for each object of the at least one object recognized in said image of said video information by applying an object model delta included in said encoded video information, to an object model for said each object of the at least one object recognized in said image of said video information; and wherein said
- video information reproducing means (VIGM), instead is configured to reproduce said video information by first rendering each improved object model corresponding to an object of the at least one object recognized in said image of said video information and subsequently by assembling the renderings of each said improved object model corresponding to an object of said at least one object recognized in said image of said video information.

13. Video decoder (VD) for decoding encoded video information according to claim 11, wherein said video information reproducing means (VIGM), further is configured to reproduce said video information, additionally being based on first generating a rendering of each object model corresponding to an object of the at least one object recognized in said image of said video information in conjunction with at least one corresponding extrinsic model parameter and/or intrinsic model parameter of said object model and subsequently by assembling the renderings of each said object model in conjunction with said at least one corresponding extrinsic model parameter and/or intrinsic model parameter of said object model.

14. Video decoder (VD) for decoding encoded video information according to claim 12, wherein said video information reproducing means (VIGM), further is configured to reproduce said video information, additionally being based on first generating a rendering of each improved object model corresponding to an object of the at least one object recognized in said image of said video information in conjunction with at least one corresponding extrinsic model parameter and/or intrinsic model parameter of said improved object model and subsequently by assembling the renderings of each said improved object model in conjunction with said at least one corresponding extrinsic model parameter and/or intrinsic model parameter of said improved object model.
